(19) **Europäisches Patentamt**
**European Patent Office**
**Office européen des brevets**

(11) **EP 2 811 785 B1**

(12) **EUROPEAN PATENT SPECIFICATION**

(45) Date of publication and mention
of the grant of the patent:
**19.07.2017 Bulletin 2017/29**

(51) Int Cl.:
***H04W 40/26*** *(2009.01)*    ***H04W 84/18*** *(2009.01)*
***H04L 12/26*** *(2006.01)*

(21) Application number: **13744045.9**

(86) International application number:
**PCT/KR2013/000842**

(22) Date of filing: **01.02.2013**

(87) International publication number:
**WO 2013/115602 (08.08.2013 Gazette 2013/32)**

(54) **DYNAMIC ROUTING METHOD IN AD-HOC NETWORK AND NETWORK DEVICE THEREFOR**

DYNAMISCHES ROUTINGVERFAHREN IN EINEM AD-HOC-NETZWERK UND NETZWERKVORRICHTUNG DAFÜR

PROCÉDÉ DE ROUTAGE DYNAMIQUE DANS UN RÉSEAU AD HOC ET DISPOSITIF DE RÉSEAU CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2012 KR 20120011237**

(43) Date of publication of application:
**10.12.2014 Bulletin 2014/50**

(73) Proprietor: **Intellectual Discovery Co., Ltd.**
**Seoul 135-745 (KR)**

(72) Inventors:
• **KAHNG, Hyun Kook**
**Seoul 134-766 (KR)**
• **CHOI, Dae In**
**Suwon-si**
**Gyeonggi-do 442-853 (KR)**
• **KIM, Min Su**
**Suwon-si**
**Gyeonggi-do 441-727 (KR)**

• **YOON, Se Joon**
**Siheung-si**
**Gyeonggi-do 429-460 (KR)**

(74) Representative: **Beck Greener**
**Fulwood House**
**12 Fulwood Place**
**London WC1V 6HR (GB)**

(56) References cited:
**EP-A1- 2 288 190**    **WO-A2-2009/158227**
**KR-A- 20080 074 420**    **KR-B1- 100 777 895**
**US-A1- 2009 122 738**

• **AHN, SANG HYUN ET AL.: 'A Load-balancing Routing Protocol in Ad Hoc Networks.' JOURNAL OF KIISE : INFORMATION NETWORKING vol. 30, no. 2, April 2003, XP055166928**
• **NAM, YONG SUB ET AL.: 'Dynamic Multi-Rae Routing Sub-Layer for Mobile Ad hoc Networks.' JOURNAL OF KOREA COMPUTER CONGRESS 2006 vol. 33, no. 33, June 2006, XP055166571**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The embodiments described herein pertain generally to a dynamic routing method in an ad-hoc network and a network device therefor.

### BACKGROUND ART

In general, wireless networks may be divided into an infra-based network and an ad-hoc network. In case of the infra-based wireless network, relay equipment such as a base station and an access point is necessary for communication between terminals. The infra-based wireless network enables communication between terminals by providing an access point to terminals within a management range of the relay equipment, but is disadvantageous in that it requires a broad transmission range for the access point. On the other hand, in case of the ad-hoc network, an independent network can be formed in an infrastructure by using direct communication between terminals.

The ad-hoc network is a network method for network devices of users having mobility such as the military, a rescue party and vehicles, consists of a group of multiple terminals, and enables communication between terminals without requiring infrastructures such as a base station and an access point.

A routing protocol on the ad-hoc network may be divided into a topology-based routing protocol and a location-based routing protocol.

Specifically, the topology-based routing protocol may be divided by "proactive," "reactive," "hybrid" methods. The "proactive routing protocol" holds information about entire nodes through periodic routing message exchange among hosts so as to have low delay time, while being disadvantageous in that routing overheads rapidly increase as a network size and node mobility increase. While the "reactive routing protocol" implements route finding for a corresponding destination only when a connection request is made so that overheads of routing message exchange are small, it is disadvantageous in that time delay results from the route finding. The "hybrid routing protocol" takes advantages of the "proactive" and "reactive" methods.

In addition, the location-based routing protocol may be divided by "GPSR," "DREAM," and "LAR" methods. The "DREAM" method enables every node to hold location information for entire nodes, and determines location information renewal depending on a relative distance among nodes and a movement pattern of nodes. The "LAR" method limits broadcasting of a route request message to a specific area.

Meanwhile, in the ad-hoc network environment, a "broadcast storm" problem may occur due to broadcast messages to be transmitted by a multiple number of nodes implementing the above-described routing protocol.

In order to resolve the routing overhead problem, a routing protocol has been conventionally implemented by applying various methods. For example, in the "probabilistic scheme," each host, which has received a broadcast message, determines whether to retransmit the broadcast message depending on a probability and transmits the broadcast message. In the "counter-based scheme," when at least a specific number of broadcast messages are received after a host queues for a random time, a broadcast message is retransmitted. In the "distance-based scheme," a certain distance, to which a broadcast message will be retransmitted, is preset, and a broadcast message is retransmitted only within the set range. In the "location-based scheme," a range, which a previously transmitted broadcast message could not have reached, is calculated, and a broadcast message is retransmitted when the range to be newly reached is a certain range or more. In the "cluster-based scheme," a cluster of nodes is formed by using ID to determine whether to retransmit a broadcast message depending on a performance of each host.

However, the above-described conventional methods to resolve routing overheads could have suggested no solution to reduce routing overheads by actively applying a routing method according to the state of an ad-hoc network, to which a network device belongs, and a network device.

Meanwhile, with respect to a technology related to example embodiments, Korean Patent Application Publication No. 2006-0065971 (Neighboring Node Management and Routing Path Setting Method in Mobile Ad-Hoc Network Environment and Network Device Using the Same) describes a method and an apparatus, which receive a broadcasted packet from a neighboring node, measure link quality for the neighboring node through the broadcasted packet to calculate a routing path with the neighboring node, and set a routing path having the shortest path to a destination node to a packet transmission path.

European Patent Application Publication No. EP 2,288,190 (Node in a Vehicle Ad-Hoc Network) describes an apparatus within an ad-hoc network of nodes, which performs congestion control, admission control and rebroadcast control operations on short messages according to the local network information and node status.

International Patent Application Publication No. WO 2009/158227 (Redundant Message Packet Suppression For In-Vehicle Ad Hoc Network) describes a method for suppressing redundant packet message transmissions to other nodes in an ad-hoc network using one or both of a timer-based approach and a probability-based approach.

US Patent Application Publication No. US 2009/0122738 (Method of Broadcasting Packets in Ad-Hoc Network) discloses a method for distributing a packet to a plurality of moving nodes, in which it is determined whether or not a node receiving a broadcast data packet is the relay node. If the receiving node is the relay node, the broadcast data is immediately distributed to a plurality of moving nodes. If the receiving node is not the relay node, further steps are taken including delaying distribution for a set period of time.

## DISCLOSURE OF THE INVENTION

### PROBLEMS TO BE SOLVED BY THE INVENTION

In view of the foregoing problems, example embodiments provide a method capable of processing dynamic routing in an ad-hoc network environment and a network device implementing the same.

### MEANS FOR SOLVING THE PROBLEMS

In one example embodiment, a dynamic routing method of a network device in an ad-hoc network, comprising: (a) collecting a factor comprising at least one of the number of neighboring network devices, a moving speed and an amount of data traffic; (b) setting a routing information transmission mode based on a value of the collected factor; (c) processing at least one of transmission and non-transmission of routing information according to the set routing information transmission mode.

In the step (b), when setting the routing information transmission mode, if the value of the factor is less than a preset threshold value, the routing information transmission mode is set to an active mode, and if the value of the factor exceeds the threshold, the routing information transmission mode is set to an inactive mode depending on a probability, and the probability is generated by the formula

$$p_r(N_i) = \frac{n(NE(N_i)) - th}{n(NE(N_i))}$$

n(NE(Ni)) is an average number of neighboring network devices of the network device and th is a preset threshold value.

In another example embodiment, a network device of an ad-hoc network, comprising: a network state monitoring unit that collects a factor comprising at least one of the number of neighboring network devices, a moving speed, and an amount of data traffic; a routing mode setting unit that sets a routing information transmission mode to an active mode if a value of the factor is less than a preset threshold, and the routing information transmission mode to an inactive mode depending on a probability if the value of the factor exceeds the threshold; and a transmitter that transmits or does not transmit routing information to another network device according to the set routing information transmission mode wherein the routing mode setting unit generates the probability based on the formula

$$p_r(N_i) = \frac{n(NE(N_i)) - th}{n(NE(N_i))}$$

n(NE(Ni)) is an average number of neighboring network devices of the network device and th is a preset threshold value.

### EFFECT OF THE INVENTION

In accordance with the above-described example embodiments, by implementing dynamic routing, which processes transmission or non-transmission of routing information of a network device in an ad-hoc network based on the state (environment) of a network device or the ad-hoc network, routing overheads in the ad-hoc network can be reduced, so that a transmission rate of packets can increase, and traffic delay time can be reduced.

Furthermore, in accordance with the above-described example embodiments, transmission of routing information can be actively processed according to the number of neighboring networks transmitting and receiving data with a network device, the amount of data traffic to be processed by a network device, and the movement state (speed and direction, etc.) of a network device.

## BRIEF DESCRIPTION OF THE DRAWINGS

FIG. 1 is a block diagram showing configuration of a network device processing dynamic routing in an ad-hoc network in accordance with an example embodiment.

FIG. 2 shows a dynamic routing algorithm of a network device in accordance with an example embodiment.

FIG. 3 is a flow chart showing a dynamic routing method in accordance with an example embodiment.

FIG. 4 is a flow chart showing a method for setting a routing information transmission mode in accordance with the example embodiment.

## DETAILED DESCRIPTION

Hereinafter, example embodiments will be described in detail with reference to the accompanying drawings so that inventive concept may be readily implemented by those skilled in the art. However, it is to be noted that the present disclosure is not limited to the example embodiments but can be realized in various other ways. In the drawings, certain parts not directly relevant to the description are omitted to enhance the clarity of the drawings, and like reference numerals denote like parts throughout the whole document.

Throughout the whole document, the terms "connected to" or "coupled to" are used to designate a connection or coupling of one element to another element and include both a case where an element is "directly connected or coupled to" another element and a case where an element is "electronically connected or coupled to" another element via still another element. In addition, the term "comprises or includes" and/or "comprising or including" used in the document means that one or more other components, steps, operations, and/or the existence or addition of elements are not excluded in addition to the described components, steps, operations and/or elements.

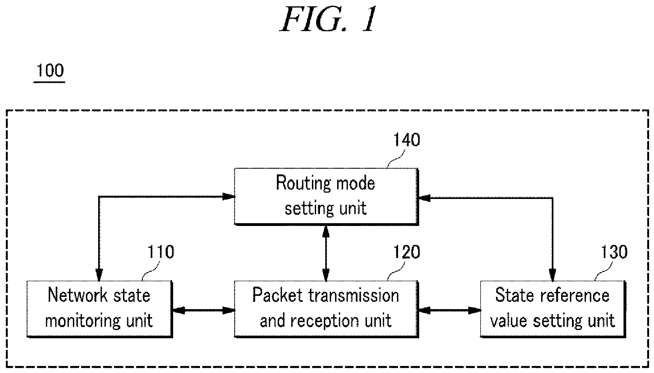

FIG. 1 is a block diagram showing configuration of a network device processing dynamic routing in an ad-hoc network in accordance with an example embodiment.

As illustrated in FIG. 1, a network device 100 in accordance with an example embodiment includes a network state monitoring unit 110, a routing mode setting unit 120, a packet transmission and reception unit 130, and a state reference value setting unit 140.

The network device 100 in accordance with the example embodiment illustrated in **FIG. 1** is a node transmitting and receiving data in an ad-hoc network, and may be, for example, a wireless or mobile node. The network device 100 may transmit its routing information to another network device, for example, through a multicast or broadcast method.

The network state monitoring unit 110 collects, in real time or periodically, a factor for at least one of the number of neighboring network devices of the network device 100, a moving speed of the network device 100, and an amount of data traffic, and identifies values of the collected factors to send them to the routing mode setting unit 120.

The network state monitoring unit 110 may measure an amount of data traffic of the network device 100 itself or collect an amount of data traffic of a multiple number of network devices on the ad-hoc network. An amount of data traffic to be collected may be an amount of data traffic for at least one of a packet, which is transmitted and received to be directly processed by the network device, and a packet, which has been forwarded to another network device. The network state monitoring unit 110 may directly collect an amount of data traffic from the packet transmission and reception unit 130 or through the state reference value setting unit 140.

The network state monitoring unit 110 may determine a neighboring network device of the network device 100 depending on the conditions set forth below.

For example, when a physical size of the ad-hoc network is D, the network device is N, a maximum data transmission distance of the network device is r, and a distance between a network device Ni and a network device Nj is INi-Njl, in case of 1Ni-Njl ≤ r, the network devices Ni and Nj may be neighboring network devices.

The network state monitoring unit 110 may calculate an average number of neighboring network devices of the network device 100.

[Math Formula 1]

$$n(AN_D) = \frac{n(T_D)\pi r^2}{D} = \frac{\text{(the number of nodes of a network D)}\pi(\text{maximum transmission distance})^2}{\text{a physical network size}}$$

In this case, $n(AN_D)$ is the average number of neighboring network devices of Ni, and $n(T_D)$ is the number of network device D.

The routing mode setting unit 120 sets a routing information transmission mode of the network device 100 based on the values of the collected factors.

Specifically, the routing mode setting unit 120 sets a routing information transmission mode to an active mode when a value of the collected factor is less than a preset threshold, and the routing information transmission mode to an inactive mode when a value of the factor exceeds the threshold.

The active mode is a mode, in which the network device 100 transmits routing information to another network device in a preset cycle or at a preset time point, and the inactive mode is a mode, in which the network device 100 does not transmit routing information in the cycle or at the time point. The routing information may include at least one of location information and a routing table of the network device 100.

The routing mode setting unit 120 may set a routing information transmission mode by comparing a general factor value calculated based on values of all factors by types or a value of each factor with its corresponding threshold. That is, the routing mode setting unit 120 may set a routing information transmission mode according to any one of types of factors, and may also set a routing information transmission mode by generally taking all factors into consideration.

Meanwhile, the routing mode setting unit 120 may identify a routing information transmission mode previously set for the network device 100, and hold the previous routing information transmission mode or change it into a routing information transmission mode set according to conditions indicated by a currently collected factor, i.e., the network state. The routing mode setting unit 120 may identify the value of the collected factor in a preset cycle or at a preset time point to set the routing information transmission mode.

In addition, the routing mode setting unit 120 may set a routing information transmission mode according to the conditions set forth below, when setting a routing information transmission mode by comparing a value of a factor with a threshold.

The routing mode setting unit 120 may set a routing information transmission mode to an inactive mode according to a preset probability if the value of the collected factor exceeds a threshold.

For example, when a threshold, at which the transition state between an active mode and an inactive mode will occur in the network D occurs, is $th_D$, the average number of neighboring nodes of the network device Ni is $n(NE(Ni))$, and the probability that the network device (Ni) will become an inactive mode is $Pr(Ni)$, the probability can be calculated through Math Formula 2 below.

[Math Formula 2]

$$P_r(N_i) = \frac{n(NE(N_i)) - th_D}{n(NE(N_i))}$$

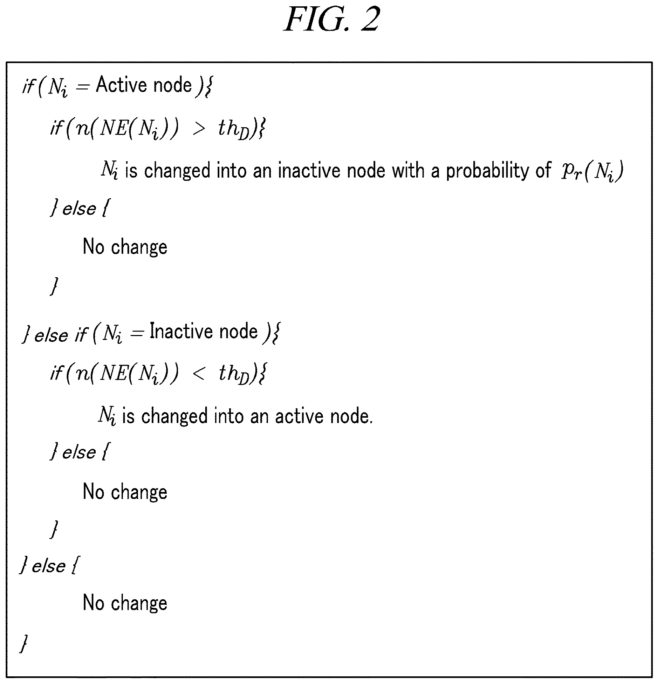

That is, the routing mode setting unit 120 in accordance with an example embodiment may set a routing information transmission mode of the network device 100 through a routing information transmission mode setting algorithm shown in **FIG. 2**.

**FIG. 2** shows a dynamic routing algorithm of a network device in accordance with an example embodiment.

**FIG. 2** presents the network device 100 as a node on a network, and shows an algorithm in the case where a collected factor and a type of a threshold are average neighboring network devices, i.e., neighboring nodes.

According to the algorithm shown in **FIG. 2**, when the network device Ni is preset to an active node, if it is determined that the average number of neighboring nodes $n(NE(Ni))$ of the network device Ni is greater than the threshold $th_D$, the network device Ni is changed into a node of an inactive mode with a probability of $Pr(Ni)$, and if the average number of neighboring nodes is less than the threshold, the active mode state is held (namely, "no change").

On the other hand, when the network device Ni is preset to an inactive node, if it is determined that the average number of neighboring nodes $n(NE(Ni))$ is smaller than the preset threshold $th_D$, the network device Ni is changed into a node of an active mode, and if the average number of neighboring nodes is greater than the threshold, the inactive mode state is held ("no change").

Returning to **FIG. 1**, the packet transmission and reception unit 130 transmits and receives a packet to be directly processed by the network device 100 or a packet to be forwarded to another network device.

In this case, the packet transmission and reception unit 130 in accordance with an example embodiment determines whether to transmit routing information of the network device 100 based on a routing information transmission mode set through the routing mode setting unit 120.

That is, if the routing information transmission mode of the network device 100 is an active mode, the packet transmission and reception unit 130 transmits the routing information to another network device in a preset cycle or at a preset time point. On the other hand, if the routing information transmission mode of the network device 100 is an inactive mode, the packet transmission and reception unit 130 does not transmit the routing information in a preset cycle or at a preset time point.

By implementing dynamic routing, which transmits or does not transmit routing information on the ad-hoc network based on the state of the network device 100, the network device 100 in accordance with an example embodiment can reduce routing overheads on the ad-hoc network, so that a transmission rate of packets can increase, and traffic delay time can be reduced.

The state reference value setting unit 140 sets the threshold based on the data transmission state of the network device 100 or the ad-hoc network, and sends the set threshold to the routing mode setting unit 120. The state reference value setting unit 140 may extract a previously set and stored threshold to provide it to the routing mode setting unit 120. In this case, the state reference value setting unit 140 may set a threshold for each of the factors by types. For example, the state reference value setting unit 140 may set each threshold based on the number of neighboring network devices, a moving speed, a moving direction and an amount of data traffic, and the size of the threshold may be changed.

On the ad-hoc network, to which an example embodiment is applied, identical or different thresholds may be set for a multiple number of network devices.

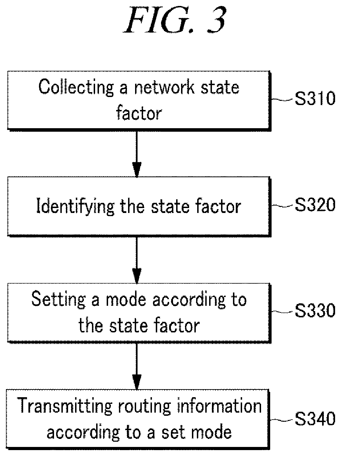

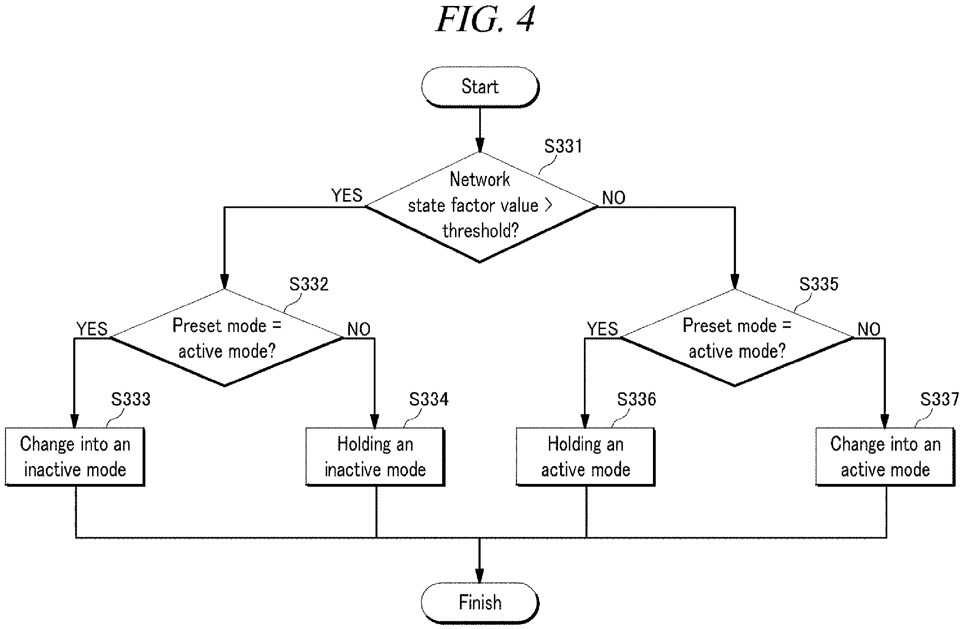

Hereinafter, the dynamic routing method on the ad-hoc network in accordance with an example embodiment will be described in detail with reference to **FIG. 3** and **FIG. 4**.

**FIG. 3** is a flow chart showing a dynamic routing method in accordance with an example embodiment.

First, a factor, which is preset in type, and of which value varies depending on the state of the ad-hoc network, to which a network device belongs, is collected (S310).

The factor includes at least one the number of neighboring network devices of a certain network device, a moving speed and an amount of data traffic.

A value of the collected factor is identified (S320), and a routing information transmission mode is set based on the collected factor (S330).

First, the value of the collected factor is compared with a preset threshold to determine an active or inactive mode. Next, it is determined whether to hold or change a preset routing information transmission mode. A routing information transmission mode is set according to the result of the determination.

If the value of the factor is less than the threshold, a routing information transmission mode is set to an active mode, and if the value of the factor exceeds the threshold, the routing information transmission mode is set to an inactive mode.

Meanwhile, the routing information transmission mode in accordance with an example embodiment may be set through the method illustrated in **FIG. 4** as set forth below.

**FIG. 4** is a flow chart showing a method for setting a routing information transmission mode in accordance with an example embodiment.

First, the value of the collected factor according to the network state is compared with the preset threshold (S331).

As a result of the determination in S331, if the value of the collected factor exceeds the threshold, it is determined whether the preset routing information transmission mode is an active or inactive mode (S332).

As a result of the determination in S332, if the preset routing information transmission mode is an active mode, the active mode is changed into an inactive mode (S333), and if the preset routing information transmission mode is an inactive mode, the inactive mode is held (S334).

As a result of the determination in S331, if the value of the collected factor is less than the threshold, it is determined whether a routing information transmission mode preset in the network device is an active or inactive mode (S335).

As a result of the determination in S335, if the preset routing information transmission mode is an active mode, the active mode is held (S336), and if the preset routing information transmission mode is an inactive mode, the inactive mode is changed into an active mode (S337).

If the preset routing information transmission mode is an active mode, the active mode is changed into an inactive mode according to a preset probability, and the probability is set based on the average number of neighboring network devices of the network device and the threshold.

Returning to **FIG. 3**, routing information of the network device is processed to be transmitted according to the routing information transmission mode set in S330 (S340).

If the set routing information transmission mode is an active mode, the routing information of the network device is transmitted to another network device in a preset cycle or at a preset time point. On the other hand, if the set routing information transmission mode is an inactive mode, the routing information is not transmitted to another network device in the cycle or at the time point.

The above description of the example embodiments is provided for the purpose of illustration, and it would be understood by those skilled in the art that various changes and modifications may be made without changing technical conception and essential features of the example embodiments. Thus, it is clear that the above-described example embodiments are illustrative in all aspects and do not limit the present disclosure. For example, each component described to be of a single type can be implemented in a distributed manner. Likewise, components described to be distributed can be implemented in a combined manner.

The scope of the inventive concept is defined by the following claims and their equivalents rather than by the detailed description of the example embodiments. It shall be understood that all modifications and embodiments conceived from the meaning and scope of the claims and their equivalents are included in the scope of the inventive concept.

**Claims**

1. A dynamic routing method of a network device (100) in an ad-hoc network, comprising:

   (a) collecting a factor comprising at least one of the number of neighboring network devices, a moving speed and an amount of data traffic (S310);
   (b) setting a routing information transmission mode based on a value of the collected factor (S330); and
   (c) processing at least one of transmission and non-transmission of routing information according to the set routing information transmission mode (S340),

   wherein in the step (b),when setting the routing information transmission mode, if the value of the factor is less than a preset threshold value, the routing information transmission mode is set to an active mode, and if the value of the factor exceeds the threshold, the routing information transmission mode is set to an inactive mode depending on a probability, and
   the probability is generated by the formula

   $$p_r(N_i) = \frac{n(NE(N_i)) - th}{n(NE(N_i))}$$

   n(NE(Ni)) = an average number of neighboring network devices of the network device
   th = a preset threshold value.

2. The dynamic routing method of a network device (100) in an ad-hoc network of claim 1,
   wherein in the step (c),
   in case of the active mode, the routing information is transmitted in a preset cycle or at a preset time point, and
   in case of the inactive mode, the routing information is not transmitted in the cycle or at the time point.

3. The dynamic routing method of a network device (100) in an ad-hoc network of claim 1,
   wherein the step (b) comprises:

   comparing the value of the factor with the threshold to determine the active or inactive mode (S331);
   determining whether to hold or change the preset routing information transmission mode (S332); and

   setting the routing information transmission mode according to the result of the determination (S333).

4. The dynamic routing method of a network device (100) in an ad-hoc network of claim 1,
   wherein the amount of data traffic is an amount of data traffic of at least one of at least one transmission packet and at least one reception packet among the network device and a plurality of network devices on the ad-hoc network, and a packet to be forwarded to another network device.

5. A network device (100) of an ad-hoc network, comprising:

   a network state monitoring unit (110) that collects a factor comprising at least one of the number of neighboring network devices, a moving speed, and an amount of data traffic (S310);
   a routing mode setting unit (140) that sets a routing information transmission mode to an active mode if a value of the factor is less than a preset threshold, and the routing information transmission mode to an inactive mode depending on a probability if the value of the factor exceeds the threshold (S330); and
   a transmitter that transmits or does not transmit routing information to another network device according to the set routing information transmission mode (S340)
   wherein the routing mode setting unit generates the probability based on the formula

$$p_r(N_i) = \frac{n(NE(N_i)) - th}{n(NE(N_i))}$$

n(NE(Ni)) = an average number of neighboring network devices of the network device
th = a preset threshold value.

6.  The network device (100) of an ad-hoc network of claim 5,
    wherein the routing mode setting unit (140) holds (S334) or changes (S333) a preset routing information transmission mode preset according to the routing information transmission mode set based on the value of the factor.

7.  The network device (100) of an ad-hoc network of claim 5,
    wherein in case of the inactive mode, the transmitter transmits the routing information in a preset cycle or at a preset time point, and in case of the active mode, the transmitter does not transmit the routing information in the cycle or at the time point (S330).

8.  The network device (100) of an ad-hoc network of claim 5,
    wherein the amount of data traffic is an amount of data traffic of at least one of at least one transmission packet and at least one reception packet among the network device and a plurality of network devices on the ad-hoc network, and a packet to be forwarded to another network device.


**Patentansprüche**

1.  Dynamisches Routing-Verfahren eines Netzwerkgeräts (100) in einem Ad-hoc-Netzwerk, umfassend:

    (a) Sammeln eines Faktors, der mindestens eines von der Anzahl von benachbarten Netzwerkgeräten, einer Bewegungsgeschwindigkeit und einer Menge an Datenverkehr umfasst (S310);
    (b) Festlegen eines Routing-Informationsübertragungsmodus basierend auf einem Wert des gesammelten Faktors (S330); und
    (c) Verarbeiten von mindestens einem von Übertragung und Nicht-Übertragung von Routing-Informationen gemäß dem festgelegten Routing-Informationsübertragungsmodus (S340), wobei in Schritt (b) beim Festlegen des Routing-Informationsübertragungsmodus, falls der Wert des Faktors geringer als ein zuvor festgelegter Schwellenwert ist, der Routing-Informationsübertragungsmodus auf einen aktiven Modus festgelegt wird, und falls der Wert des Faktors die Schwelle überschreitet, der Routing-Informationsübertragungsmodus auf einen inaktiven Modus festgelegt wird, abhängig von einer Wahrscheinlichkeit, und die Wahrscheinlichkeit erzeugt wird durch die Formel

$$p_r(N_i) = \frac{n(NE(N_i)) - th}{n(NE(N_i))}$$

n(NE(Ni)) = eine durchschnittliche Anzahl an benachbarten Netzwerkgeräten des Netzwerkgeräts
th = ein zuvor festgelegter Schwellenwert.

2.  Dynamisches Routing-Verfahren eines Netzwerkgeräts (100) in einem Ad-hoc-Netzwerk nach Anspruch 1, wobei in Schritt (c)
    die Routing-Informationen im Falle des aktiven Modus in einem zuvor festgelegten Zyklus oder zu einem zuvor festgelegten Zeitpunkt übertragen werden, und
    die Routing-Informationen im Falle des inaktiven Modus nicht in dem Zyklus oder zu dem Zeitpunkt übertragen werden.

3.  Dynamisches Routing-Verfahren eines Netzwerkgeräts (100) in einem Ad-hoc-Netzwerk nach Anspruch 1, wobei Schritt (b) Folgendes umfasst:

Vergleichen des Wertes des Faktors mit der Schwelle, um den aktiven oder inaktiven Modus zu bestimmen (S331);

Bestimmen, ob der zuvor festgelegte Routing-Informationsübertragungsmodus zu halten oder zu ändern ist (S332); und

Festlegen des Routing-Informationsübertragungsmodus gemäß dem Ergebnis der Bestimmung (S333).

4. Dynamisches Routing-Verfahren eines Netzwerkgeräts (100) in einem Ad-hoc-Netzwerk nach Anspruch 1, wobei die Menge an Datenverkehr eine Menge an Datenverkehr von mindestens einem von mindestens einem Übertragungspaket und mindestens einem Empfangspaket unter dem Netzwerkgerät und einer Vielzahl von Netzwerkgeräten in dem Ad-hoc-Netzwerk und einem Paket zum Weiterleiten an ein anderes Netzwerkgerät ist.

5. Netzwerkgerät (100) eines Ad-hoc-Netzwerks, umfassend:

eine Netzwerkzustandsbeobachtungseinheit (110), die einen Faktor sammelt, der mindestens eines von der Anzahl von benachbarten Netzwerkgeräten, einer Bewegungsgeschwindigkeit und einer Menge an Datenverkehr umfasst (S310);

eine Routing-Modusfestlegungseinheit (140), die einen Routing-Informationsübertragungsmodus auf einen aktiven Modus festlegt, falls ein Wert des Faktors geringer als eine zuvor festgelegte Schwelle ist, und den Routing-Informationsübertragungsmodus auf einen inaktiven Modus, abhängig von einer Wahrscheinlichkeit, falls der Wert des Faktors die Schwelle überschreitet (S330); und

einen Sender, der Routing-Informationen gemäß dem festgelegten Routing-Informationsübertragungsmodus auf ein anderes Netzwerkgerät überträgt oder nicht überträgt (S340),

wobei die Routing-Modusfestlegungseinheit die Wahrscheinlichkeit basierend auf der folgenden Formel erzeugt:

$$p_r(N_i) = \frac{n(NE(N_i)) - th}{n(NE(N_i))}$$

n(NE(Ni)) = eine durchschnittliche Anzahl an benachbarten Netzwerkgeräten des Netzwerkgeräts

th = ein zuvor festgelegter Schwellenwert.

6. Netzwerkgerät (100) eines Ad-hoc-Netzwerks nach Anspruch 5, wobei die Routing-Modusfestlegungseinheit (140) einen zuvor festgelegten Routing-Informationsübertragungsmodus, der gemäß dem basierend auf dem Wert des Faktors festgelegten Routing-Informationsübertragungsmodus festgelegt wurde, hält (S334) oder ändert (S333).

7. Netzwerkgerät (100) eines Ad-hoc-Netzwerks nach Anspruch 5, wobei der Sender im Falle des inaktiven Modus die Routing-Informationen in einem zuvor festgelegten Zyklus oder zu einem zuvor festgelegten Zeitpunkt überträgt und der Sender im Falle des aktiven Modus die Routing-Informationen nicht in dem Zyklus oder zu dem Zeitpunkt überträgt (S330).

8. Netzwerkgerät (100) eines Ad-hoc-Netzwerks nach Anspruch 5, wobei die Menge an Datenverkehr eine Menge an Datenverkehr von mindestens einem von mindestens einem Übertragungspaket und mindestens einem Empfangspaket unter dem Netzwerkgerät und einer Vielzahl von Netzwerkgeräten auf dem Ad-hoc-Netzwerk und einem Paket zum Weiterleiten an ein anderes Netzwerkgerät ist.

**Revendications**

1. Procédé de routage dynamique d'un dispositif réseau (100) dans un réseau ad-hoc, comprenant :

(a) la collecte d'un facteur comprenant au moins l'un du nombre de dispositifs réseau de voisinage, une vitesse de déplacement et une quantité de trafic de données (S310) ;

(b) la définition d'un mode de transmission d'informations de routage sur la base d'une valeur du facteur collecté (S330) ; et

(c) le traitement d'au moins l'une d'une transmission et d'une non-transmission d'informations de routage selon le mode de transmission d'informations de routage défini (S340),

dans lequel à l'étape (b), lors de la définition du mode de transmission d'informations de routage, si la valeur du facteur est inférieure à une valeur de seuil prédéfinie, le mode de transmission d'informations de routage est défini sur un mode actif, et si la valeur du facteur dépasse le seuil, le mode de transmission d'informations de routage est défini sur un mode inactif dépendant d'une probabilité, et
la probabilité est générée par la formule

$$p_r(N_i) = \frac{n(NE(N_i)) - th}{n(NE(N_i))}$$

n(NE(Ni)) = un nombre moyen de dispositifs réseau de voisinage du dispositif réseau
th = une valeur de seuil prédéfinie

2. Procédé de routage dynamique d'un dispositif réseau (100) dans un réseau ad-hoc selon la revendication 1, dans lequel à l'étape (c)
dans le cas du mode actif, les informations de routage sont transmises dans un cycle prédéfini ou à un point temporel prédéfini, et
dans le cas du mode inactif, les informations de routage ne sont pas transmises dans le cycle ou au point temporel.

3. Procédé de routage dynamique d'un dispositif réseau (100) dans un réseau ad-hoc selon la revendication 1, dans lequel l'étape (b) comprend :

   la comparaison de la valeur du facteur avec le seuil pour déterminer le mode actif ou inactif (S331);
   la détermination de maintenir ou de changer le mode de transmission d'informations de routage prédéfini (S332) ; et
   la définition du mode de transmission d'informations de routage en fonction du résultat de la détermination (S333).

4. Procédé de routage dynamique d'un dispositif réseau (100) dans un réseau ad-hoc selon la revendication 1, dans lequel la quantité du trafic de données est une quantité de trafic de données d'au moins l'un d'au moins un paquet de transmission et au moins un paquet de réception parmi le dispositif réseau et une pluralité de dispositifs réseau sur le réseau ad-hoc, et un paquet devant être transféré à un autre dispositif réseau.

5. Dispositif réseau (100) d'un réseau ad-hoc, comprenant :

   une unité de surveillance d'état du réseau (110) qui collecte un facteur comprenant au moins l'un du nombre de dispositifs réseau de voisinage, une vitesse de déplacement et une quantité de trafic de données (S310) ;
   une unité de définition de mode de routage (140) qui définit un mode de transmission d'informations de routage sur un mode actif si une valeur du facteur est inférieure à un seuil prédéfini, et le mode de transmission d'informations de routage sur un mode inactif dépendant d'une probabilité si la valeur du facteur dépasse le seuil (S330) ; et
   un transmetteur qui transmet ou ne transmet pas les informations de routage à un autre dispositif réseau en fonction du mode de transmission d'informations de routage défini (S340)
   dans lequel l'unité de définition de mode de routage génère la probabilité sur la base de la formule

$$p_r(N_i) = \frac{n(NE(N_i)) - th}{n(NE(N_i))}$$

n(NE(Ni)) = un nombre moyen de dispositifs réseau de voisinage du dispositif réseau
th = une valeur de seuil prédéfinie.

6. Dispositif réseau (100) d'un réseau ad-hoc selon la revendication 5, dans lequel l'unité de définition de mode de routage (140) maintient (S334) ou change (S333) un mode de transmission d'informations de routage prédéfini en fonction du mode de transmission d'informations de routage défini sur la base de la valeur du facteur.

7. Dispositif réseau (100) d'un réseau ad-hoc selon la revendication 5,
dans lequel dans le cas du mode inactif, le transmetteur transmet les informations de routage dans un cycle prédéfini ou à un point temporel prédéfini, et dans le cas du mode actif, le transmetteur ne transmet pas les informations de routage dans le cycle ou au point temporel (S330).

8. Dispositif réseau (100) d'un réseau ad-hoc selon la revendication 5,
dans lequel la quantité de trafic de données est une quantité de trafic de données d'au moins l'un d'au moins un paquet de transmission et au moins un paquet de réception parmi le dispositif réseau et une pluralité de dispositifs réseau sur le réseau ad-hoc, et un paquet devant être transféré à un autre dispositif réseau

# FIG. 1

100

Routing mode setting unit — 140

Network state monitoring unit — 110

Packet transmission and reception unit — 120

State reference value setting unit — 130

## FIG. 2

```
if ( N_i = Active node ){

    if ( n( NE( N_i )) > th_D ){

        N_i is changed into an inactive node with a probability of p_r( N_i )

    } else {

        No change

    }

} else if ( N_i = Inactive node ){

    if ( n( NE( N_i )) < th_D ){

        N_i is changed into an active node.

    } else {

        No change

    }

} else {

        No change

}
```

# FIG. 3

Collecting a network state factor —S310

Identifying the state factor —S320

Setting a mode according to the state factor —S330

Transmitting routing information according to a set mode —S340

*FIG. 4*

Start

S331 — Network state factor value > threshold?

YES → S332 — Preset mode = active mode?
- YES → S333 — Change into an inactive mode
- NO → S334 — Holding an inactive mode

NO → S335 — Preset mode = active mode?
- YES → S336 — Holding an active mode
- NO → S337 — Change into an active mode

Finish

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20060065971
- EP 2288190 A
- WO 2009158227 A
- US 20090122738 A